# EUROPEAN PATENT APPLICATION

(11) **EP 0 586 083 A2**
(43) Date of publication of application: **09.03.1994**
(21) Application number: 93305951.1
(22) Date of filing: 28.07.1993
(51) Int. Cl.: G06K 7/08, G01S 13/02

(54) **Collar transponder**

(30) Priority: 31.07.1992 GB 9216303
(71) Applicant: HUGHES MICROELECTRONICS EUROPA LIMITED, Glenrothes Fife KY7 5PY Scotland (GB)
(72) Inventor: Beales, John, Scotlandwell, Kinross KY13 7JE (GB)
(74) Representative: Colgan, Stephen James

(57) **Abstract**

A magnetic transponder (30) is mounted on the ferrous body (12) of a compressed gas bottle (10) to enable remote identification of the bottle. The transponder includes an integrated circuit (44) containing an identification code and/or data for the specific bottle and also contains an antenna (42) configured and arranged to minimize decreased range effects of the container body on the antenna range. In one embodiment the antenna comprises a flat air core coil mounted on a bottle upper shoulder (14) and surrounding the bottle fitting (16). A reader/exciter (92) positioned at a short distance from the bottle creates a magnetic flux that magnetically couples to the transponder antenna to cause the latter to energize transponder circuitry and transmit an identification signal and/or data.

## Description

### BACKGROUND OF THE INVENTION

### 1. Field of the Invention

The present invention relates to identification of ferrous metal objects, and more particularly concerns remote identification of such objects at increased distances.

### 2. Description of Related Art

Compressed gas bottles, such as cylindrical ferrous metal containers for compressed nitrogen, oxygen or the like, are commonly used and re-used, frequently over a lifetime of many years. The bottles are filled at a suitable central location and distributed for use by customers who rent the bottles and their contents. The bottles are then returned for refilling and reuse. It is important to be able to identify specific bottles to facilitate billing of customers and to maintain records of the history, locations and other information of individual bottles.

To keep track of such bottles it is common practice to use metal dies to stamp identification numbers on the exterior surface of the bottle so that the identification numbers can be visually read and locations and uses of the bottle can thus be recorded. It is not uncommon for such bottles to be stored for periods of years in hostile environments so that the ferrous bodies become rusted and identification numbers illegible or readable only with difficulty. It may be necessary to brush rust from the bottle or otherwise clean its surface to enable reading of such stamped numbers. This, of course, is difficult and time-consuming.

It has been suggested to mount a remote magnetic transponder in a hole drilled in the bottle wall. However, it is found that the metal of the bottle wall absorbs much of the magnetic flux of a magnetic transponder, so that significant reduction in range is encountered. In fact, it is difficult to read such transponders, mounted within a hole in the bottle wall, at distances greater than two to three inches. Further, difficulties are encountered in positioning the exciter/reader close enough to excite the transponder and read its return signal while at the same time avoiding physical contact with the bottle fitting.

Accordingly, it is an object of the present invention to provide an identification system for ferrous metal objects that avoids or minimizes above mentioned problems.

### SUMMARY OF THE INVENTION

In carrying out principles of the present invention in accordance with a preferred embodiment thereof a transponder has an air core coil antenna that is positioned on the bottle shoulder and circumscribes a fitting on the bottle. Thus an antenna coil is configured and arranged to generate a magnetic flux field having lines of flux that flow outside of the bottle body and are compressed and distorted by the ferrous bottle body to flow outside the body with a range that is subject to less degradation by the metal body. Mounting the coil antenna at the neck of the fitting prevents removal of the transponder without dismantling the bottle fitting.

### BRIEF DESCRIPTION OF THE DRAWINGS

In the accompanying drawings:
FIG. 1 is a pictorial view of an upper portion of a compressed gas bottle embodying a transponder employing principles of the present invention;
FIG. 2 is an enlarged perspective view, with parts broken away, showing assembly of a transponder antenna housing and chip;
FIG. 3 is a partial sectional view illustrating the interfitting of transponder housing parts;
FIG. 4 illustrates the transponder of FIGS. 1 through 3 and a magnetic flux pattern produced thereby;
FIGS. 5 and 6 are exploded pictorial views illustrating different transponder housing lid configurations; and
FIGS. 7 and 8 show alternative arrangements for mounting the transponder.

### DESCRIPTION OF PREFERRED EMBODIMENTS

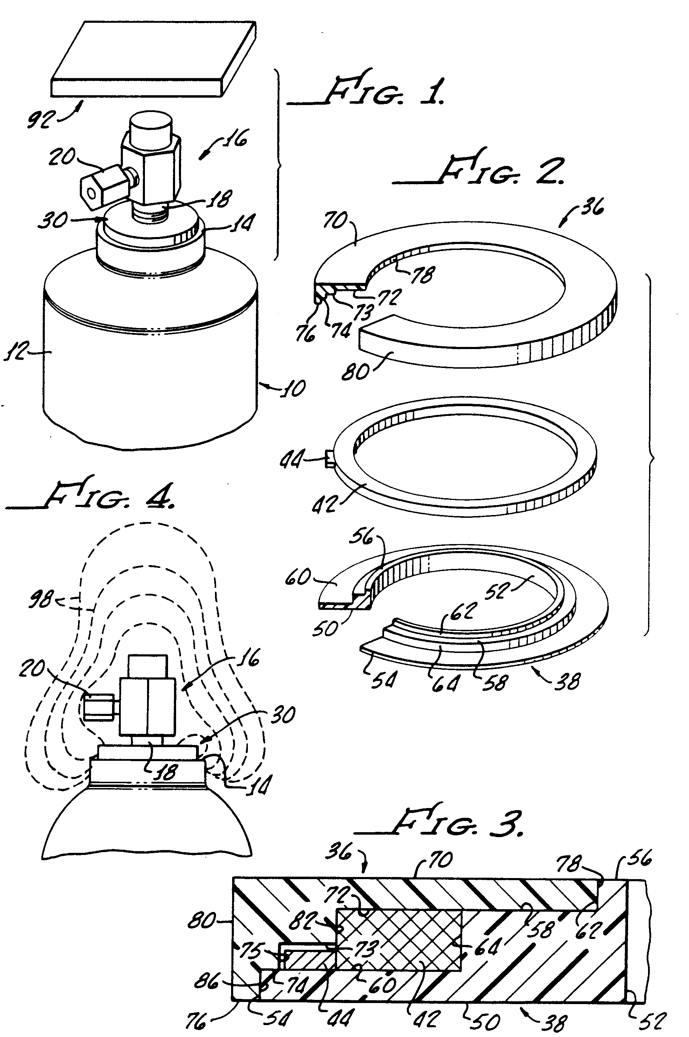

As illustrated in FIG. 1, a conventional ferrous metal compressed gas cylinder 10 includes a right circular cylindrical heavy walled body 12 having a flat upper shoulder 14 to which is connected a connection valve fitting 16 that is normally threadedly engaged in a threaded aperture that is centrally located in the upper shoulder 14. Usually the fitting is made of brass or some other non-ferrous (non-magnetic) metal. Fitting 16 includes a lower threaded connecting neck portion 18 that is threadedly engaged in and sealed to a threaded bore in the bottle shoulder and also includes an output connector 20. In normal upright position of the bottle, its axis is vertical and upper shoulder 14 is horizontal. The bottle configuration illustrated in FIG. 1 is merely exemplary, and it will be readily understood that various other bottle and fitting configurations are known and may be employed with the present invention.

For identification of the specific bottle 10, a transponder 30, having a generally flat annular form, is positioned on top of the shoulder 14 and surrounds the neck 18 of the bottle fitting.

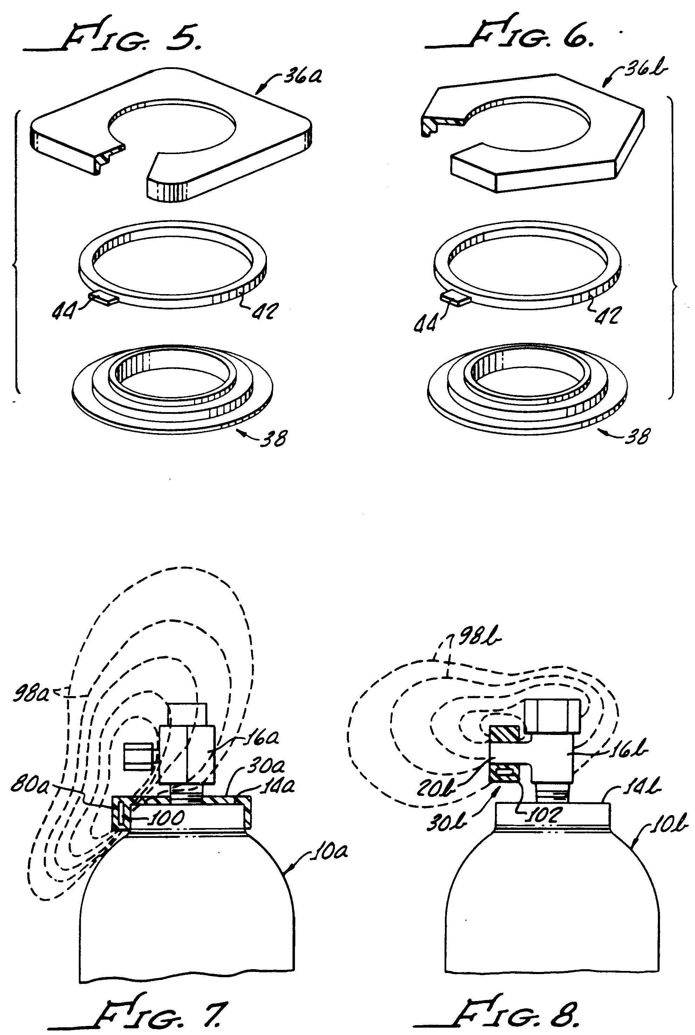

As can be seen in FIGS. 2 and 3, transponder 30 includes an annular housing comprising an annular lid and an annular base. When assembled, the two cooperate to form a continuous annular groove or recess that runs completely around the interior of the housing and receives a flat annular electrically conductive air core coil 42 that comprises the antenna of the transponder. Also mounted in the housing at a point closely adjacent the antenna is transponder circuitry formed on an integrated circuit chip 44, having electrical connections to the antenna coil. The transponder base 38 (FIG. 3) has a flat bottom surface 50, an inward exterior wall 52, an outward exterior wall 54, and inner, intermediate and outer interior surfaces 56, 58, and 60. Inner and intermediate surfaces 56 and 58 are connected by an upstanding inner wall 62 and intermediate and outer surfaces 58 and 60 are connected by upstanding intermediate wall 64.

Lid 36 includes a flat upper exterior surface 70, an inner surface 72, an intermediate surface 74, and a lower exterior surface 76, all interposed between an inward end wall 78 and an outer exterior end wall 80. An inner upstanding wall 82 extends from inner surface 72 toward intermediate surface 74 of the lid while an outer upstanding wall 86 of the lid interconnects its intermediate and outer surfaces 74 and 76. A second intermediate surface 73 and wall 75 are positioned between wall 82 and surface 76. Surfaces 73,74 and wall 75 define a second annular groove of which a part receives integrated circuit chip 44. The several surfaces are interfitting when assembled, as indicated in FIG. 3, with the groove being formed and defined between the base and lid by lid inner surface 72 and base outer surface 60, lid inner wall 82 and base intermediate wall 64.

Although all components of the base, and particularly the inward exterior wall 52 that surrounds fitting neck 18, are circular, the lid may be formed with a custom external configuration that varies from one transponder to another, even though all internal lid surfaces that correspond with and mate with the base will remain of a circular configuration. Thus, for example, all elements 52, 62, 64, and 54 of the base are circular, and corresponding surfaces 78, 82 and 86 of the lid are circular. However, the outer external wall 80 of the lid, and also its upper surface 70, may have varying external configurations even though the lid still will, in all its external configurations, have internal configurations that directly interfit with the circular base component. Thus, the external wall 80 and upper surface 70 of the lid may be either circular, square, hexagonal or some other configuration. For example, a square configuration of lid 36a is illustrated in FIG. 5, which shows a transponder having a base 38 that is geometrically identical to the base 38 of FIGS. 2 and 3 and receives an identical antenna 42 and chip 44. Similarly, the transponder of FIG. 6 has a circular base 38 identical to that of FIGS. 2 and 3 but employs an hexagonal lid 36b to encompass an identical antenna 42 and chip 44.

The transponders described herein are employed in remote magnetically coupled identification systems of the type shown in the United States Patent to Milheiser, 4,730,188. The antenna 42 and integrated circuit 44 embody circuitry of the nature described in detail in the Milheiser patent. Transponders of this general type are made by Hughes Identification Devices, Inc. and sold as Proxcard∼ readers or other types of transponder systems which include various types of readers, scanners and transponders for a variety of identification purposes. Such devices have reading ranges in the order of eight to twelve inches. However, it has been observed that when this type of transponder is mounted adjacent to or on a metal object, these ranges are greatly reduced.

As shown in the patent to Milheiser and described in detail therein, and as embodied in the Hughes devices, this type of magnetically coupled identification system includes a reader/exciter, such as that shown at 92 in FIG. 1. The reader/exciter transmits a radio frequency exciter signal at a frequency which may be, for example, in the order of about 125 or 400 kilohertz. The transmitted signal produces a magnetic flux field that is magnetically coupled to the transponder antenna to energize the latter and provide power for the transponder identification and data readout circuitry. The latter carries no battery or other source of stored power. Upon energization of its antenna, the transponder identification circuitry assembles an identification code signal and other data that are stored in the transponder. The transponder assembles an information signal, which may contain identification code and other data related to the individual bottle. This information signal is fed to the transponder antenna to cause the latter to transmit a return or information signal that is received by the reader/exciter where it is detected and employed for selected use.

Although various configurations of the Hughes Identification Devices transponders find satisfactory application in a wide variety of environments, it has not heretofore been feasible to employ these for identification of compressed gas bottles. As previously mentioned, the presence of a large ferrous metal object, such as the bottle walls, decreases the range of an embedded transponder to such an extent that practical utility is greatly diminished, if not completely negated. However, with the transponder configuration and position described herein, and, particularly with the flat annular antenna coil 42 mounted within the housing groove and surrounding the fitting neck, the transponder is readily mounted on the bottle. The transponder is permanently connected to the bottle in an arrangement that significantly decreases the adverse range limiting effects of the presence of the ferrous metal bottle wall on the transponder range.

The described transponder, being of flat, annular configuration, has a central aperture that closely receives the fitting neck 18. The transponder is mounted to the bottle, prior to filling the bottle, by simply removing the fitting 16 and then replacing it while positioning the fitting neck 18 through the aperture that extends through the center of the transponder housing. This housing aperture is defined by the inward exterior wall 52 of the housing base. Wall 52 is a relatively snug fit around the neck 18 of the bottle, and thus the transponder is permanently affixed to the bottle without use of or need for any further connecting mechanism. Nevertheless it will be readily appreciated that the antenna housing may be otherwise fixedly connected to the bottle, as by adhesive or other connecting devices as may be desired. With the illustrated arrangement, namely with the fitting neck 18 extending through the annular continuous antenna housing into its substantially permanent threaded engagement with the bottle itself, the transponder is permanently mounted and cannot be removed without dismantling the bottle or destroying the transponder. Moreover, the transponder mounting requires no disturbance of the bottle integrity, as would occur upon forming a hole or recess int he bottle body.

FIG. 4 illustrates improved range advantages derived from the described configuration and location of the flat annular transponder 30 that is mounted on the flat upper surface of the bottle shoulder and surrounding the fitting neck 18. When the illustrated transponder antenna is excited, an alternating current field is generated in the aperture coil which produces an alternating magnetic flux having a pattern as illustrated by dotted lines 98 in FIG. 4. The lines of magnetic flux of this arrangement, instead of being largely absorbed within the ferrous metal walls of the container, are distorted and compressed by their proximity to the container walls. Lines of flux, which tend to flow axially of the coil, flow for example upwardly (in a generally axial direction) from the upper side of the coil, flowing up and down the fitting 16 and then back downwardly and around to the lower side of the coil and through only a very small portion of the ferrous bottle body. The configuration of the annular coil and its position and orientation with respect to the bottle shoulder effectively compress and distort the normal free space flow pattern of the magnetic lines of flux, compressing these lines of flux together and forcing them further outwardly, thereby significantly increasing the antenna range. With the illustrated arrangement, antenna range extends significantly beyond the upper end of fitting 16, whereas range of prior art devices may be in the order of one to two inches, so that the fitting previously would interfere with placement of the reader/exciter.

The antenna location and configuration illustrated in FIGS. 1 through 4 is presently preferred. However, other arrangements of transponder and their antennae on and with respect to metal bottles are also contemplated. For example, as illustrated in FIG. 7, bottle 10a, having an upper shoulder 14a and a fitting 16a, receives a generally annular transponder housing 30a, having at one portion of its periphery a thicker wall portion 80a in which is mounted a right circular cylindrical transponder 100, such as Hughes Identification Device TX1400 series. Such device includes, for example, a cylindrical glass housing in which is mounted a cylindrical air core antenna coil having an axis parallel to the axis of the cylindrical housing. The housing also contains the transponder circuitry chip. In an arrangement such as shown in FIG. 7, the axis of the cylindrical transponder is vertical, that is, parallel to the axis of the bottle and its fitting and may have dimensions from as small as 11 millimeters in length by 2.1 millimeters in diameter for Hughes Identification Device Model TX1400L to 28 millimeters in length by 3.5 millimeters in diameter for Model TX1408L1. With an arrangement such as illustrated in FIG. 7, flux patterns of the transponder are as illustrated at 98a, again being compressed and distorted by the presence of the ferrous bottle surface but having a relatively small percentage of the lines of flux actually flowing through the metal bottle. Importantly, in the arrangement of FIG. 7, as in the prior arrangement, the axis of the transponder antenna has one end pointing away from the metal bottle so that lines of flux emanating from this side may extend at a significant distance from the transponder. These lines of flux return and are concentrated in the relatively lower magnetic reluctance path of the metal body, but this concentration is at the other end of the coil wherein the lines of flux come back in at the other side of the coil axis.

Still another transponder arrangement is illustrated in FIG. 8, wherein an annular transponder housing 30b, also including a cylindrical air core coil and transponder circuitry 102, is mounted coaxially with the fitting connecting section 20 of fitting 16b. In this arrangement the transponder housing is annular and has an aperture that closely receives the fitting connector 20. Again, as in FIG. 7, a cylindrical transponder 102 of the type previously described is employed. This transponder has its longitudinal axis parallel to the axis of fitting connector 20 (e.g., horizontal when the bottle is upright) and is slightly spaced from the ferrous metal container body by being mounted on the non-ferrous fitting 16. Lines of flux 95b flow as indicated in FIG. 8 and extend outwardly a relatively long distance from the bottle, thereby greatly increasing the transponder range.

There have been described various transponder arrangements particularly useful for remote identification of ferrous metal compressed gas bottles which employ unique positioning, connections and configuration of transponder antennae to provide significantly increased transponder range.

## Claims

1. A magnetically coupled remote identification system for an object (10) containing a metal that distorts magnetic flux fields comprising:
an exciter/reader (92) including means for transmitting a radio frequency magnetic excitation signal and means for detecting a responsive return signal, wherein the return signal includes an information signal,
transponder means (30) responsive to said magnetic excitation signal for transmitting a return signal having an information signal section, transponder means including circuit means for generating an information signal, and
antenna means (42) connected with said circuit means for receiving and transmitting radio frequency magnetic excitation signals,
said antenna means comprising an air core coil (42) connected to receive said excitation signal and produce a magnetic flux field for coupling said antenna to said exciter/reader means, said coil being connected to said object and configured and arranged to cause said flux field through said antenna to be distorted and compressed by said metal object to be forced outwardly from said metal object.

2. The system of Claim 1 wherein said object has an external surface (14) and wherein said coil is mounted adjacent said external surface.

3. The system of Claim 1 wherein said object has a flat surface (14) and said coil comprises a relatively flat wire coil mounted flat against said flat surface.

4. The system of Claim 1 wherein said object has a surface with a portion thereof of known configuration, and wherein said antenna means comprises a housing (70,80) having a surface conforming to the configuration of said object surface, and being mounted thereon, said coil comprising a number of turns of wire mounted within said housing.

5. The system of Claim 1 wherein said object comprises a metal container (10) having an upper shoulder (14) and a non-ferrous connecting mechanism (16) extending outwardly from said shoulder, said antenna comprising a coil (42) encircling said connecting mechanism and mounted on said shoulder.

6. For use with a compressed gas bottle (10) formed of a ferrous metal and having an upper shoulder (14) to which is mounted a non-ferrous connecting fitting, a magnetically coupled transponder comprising:
an antenna housing (70,80) configured and arranged to be mounted adjacent said shoulder,
an air core coil (42) mounted in said housing, and
a transponder circuit chip (44) mounted in said housing, said antenna coil being configured and arranged to generate a magnetic flux field having lines of flux (98) that flow outside of said bottle and are compressed and distorted by the metal of said container to flow outside of said bottle.

7. The transponder of Claim 6 wherein said antenna coil (42) closely encircles said non-ferrous fitting (16) and is configured and arranged to generate a magnetic flux field (98) that is compressed and distorted along outer surfaces of said container and flows over and around said container fitting.

8. A method of identifying a compressed gas bottle (10) having an upper shoulder (14) and a non-ferrous connecting fitting (16) extending from said shoulder, said method comprising the steps of:
mounting on said shoulder (14) a magnetically responsive transponder (30) having transponder circuitry (44) for transmitting a bottle information signal and having an annular transponder coil (42), said step of mounting comprising positioning said coil (42) on said shoulder (14) to circumscribe said fitting (16), and
magnetically exciting said transponder coil from a remote exciter/reader, thereby to cause said transponder to energize the transponder coil to transmit a signal containing an information signal that is unique to said bottle.

9. An annular transponder comprising:
an annular base (38) having:
a continuous bottom surface (50),
an inner interior surface (56) at an upper portion of said base,
an intermediate interior surface (58) between said upper portion and bottom surface, and
an outer interior surface (60) that is closer to said bottom surface (50) than said intermediate surface (58), said intermediate surface (58) being closer to said bottom surface (50) than said inner interior surface (56),
said base including an inner upstanding wall (62) extending between said inner (56) and intermediate (58) surface, an intermediate upstanding wall (64) extending between said intermediate (58) and outer interior surface (60), an outward wall (54) extending between said bottom surface (50) and outer interior surface (60), and
a housing lid having:
an intermediate surface (74) in contact with said base outer interior surface (60),
an inner surface (72) in contact with said base intermediate surface (55),
an intermediate upstanding wall (82) between said inner (72) and intermediate (74) lid surfaces, said lid inner surface (72) being spaced from said base outer interior surface (60) and said lid intermediate wall (82) being radially spaced from said base intermediate wall (64) to form an annular groove in said housing,
an antenna coil (42) in said groove, and
transponder circuitry (44) mounted within said housing.

10. A remotely identifiable compressed gas bottle comprising:
a container (10) formed of a ferrous metal having a flat upper shoulder (14),
a non-ferrous connecting fitting (16) mounted to said upper shoulder (14),
a magnetically coupled transponder (30) mounted to said container body externally thereof, and
means for connecting said magnetic transponder to said bottle and to said container.

11. The apparatus of Claim 10 wherein said transponder comprises an air core coil (42) mounted on said bottle shoulder (14) and having an aperture that receives at least a portion of said fitting (16).

12. The apparatus of Claim 10 wherein said fitting (16) includes a laterally projecting section (20b), and wherein said transponder includes a housing (30b) mounted on said projection and a transponder antenna (102) in said housing.

13. The apparatus of Claim 10 wherein said transponder comprises a flat, annular housing (36,38) on said shoulder, said housing having an aperture (78) that receives a portion of said fitting, said means for connecting said antenna housing to said bottle comprising the antenna housing aperture that receives said fitting.

14. The apparatus of Claim 13 wherein said housing (36,38) includes a flat air core coil (42) surrounding said fitting and transponder circuitry.
